# EUROPEAN PATENT APPLICATION

(11) **EP 1 790 875 A1**
(43) Date of publication of application: **30.05.2007**
(21) Application number: 06124981.9
(22) Date of filing: 29.11.2006
(51) Int. Cl.: F16H 37/04

(54) **Transmission system with front-mounted sub group**

(30) Priority: 29.11.2005 JP 2005343817
(71) Applicant: KANZAKI KOKYUKOKI MFG. CO., LTD., Amagasaki-shi, Hyogo 661-0981 (JP)
(72) Inventor: HASEGAWA, Toshiyuki, Amagasaki-shi Hyogo 661-0981 (JP)
(74) Representative: Skuhra, Udo

(57) **Abstract**

There is provided a traveling system auxiliary speed change device interposed between an engine and a synchronous multi-stage speed change device, the traveling system auxiliary speed change device including a high-low speed switching mechanism and a forward-reverse switching mechanism arranged in order from an upstream side to a downstream side in a power-transmitting direction. The forward-reverse switching mechanism is configured to be brought into a power-disconnected state in conjunction with a disconnecting operation of a clutch operation member for engaging or releasing the transmission state of a traveling system transmission path from the engine to driving wheels.

## Description

### BACKGROUND OF THE INVENTION

### Field of the Invention

The present invention relates to a traveling system auxiliary speed change device applied to a working vehicle such as a tractor.

### Related Art

In a working vehicle in which a synchronous multi-stage speed change device is interposed in a traveling system transmission path from an engine to driving wheels, it is conventionally known to interpose a traveling system auxiliary speed change device including a forward-reverse switching mechanism and a high-low speed switching mechanism between the engine and the synchronous multi-stage speed change device (see e.g., Japanese Laid-Open Patent Publication No. 2002-79839).

By interposing the forward-reverse switching mechanism and the high-low speed switching mechanism between the engine and the synchronous multi-stage speed change device, the transmitting direction of the traveling system transmission path can be switched and the speed change range of the traveling system transmission path can be enlarged.

The synchronous multi-stage speed change device is configured to change the rotation speed on the driven side with respect to the rotation speed on the driving side by engaging the corresponding driving-side spline and the driven-side spline after synchronously rotating a synchronizer ring and a synchronizing cone through friction engagement, where the speed change operation of the synchronous multi-stage speed change device is performed on the basis that the traveling system transmission path is in a power-disconnected state.

Specifically, the forward-reverse switching mechanism is configured so as to be brought into the power-disconnected state in conjunction with the disconnecting operation of a clutch operation member arranged in the vicinity of the driver's seat of the working vehicle. The synchronous multi-stage speed change device is operated so as to change speed after the forward-reverse switching mechanism is brought into the power-disconnected state by the clutch operation member.

However, sufficient consideration is not made in reducing the volume of the synchronous multi-stage speed change device in the conventional working vehicle of the type equipped with the traveling system auxiliary speed change device and the synchronous multi-stage speed change device.

That is, in the conventional working vehicle, the forward-reverse switching mechanism is arranged on the upstream side in the power-transmitting direction from the high-low speed switching mechanism.

In the conventional configuration, the driving side of the synchronous multi-stage speed change device remains operatively connected to the high-low speed switching mechanism even if the forward-reverse switching mechanism is shifted to the power-disconnected state by the clutch operation member in order to operate the synchronous multi-stage speed change device for changing speed.

Therefore, the synchronizer ring and the synchronizing cone must absorb the inertia energy of the high-low speed switching mechanism when synchronizing the synchronizer ring and the synchronizing cone in time of the speed change operation of the synchronous multi-stage speed change device.

In other words, the device having a synchronizing capacity capable of absorbing the inertia energy of the high-low speed switching mechanism must be used for the synchronous multi-stage speed change device in the conventional working vehicle, resulting in enlarging the synchronous multi-stage speed change device.

### SUMMARY OF THE INVENTION

The present invention, in view of the above, aims to provide a traveling system auxiliary speed change device including a high-low speed switching mechanism and a forward-reverse switching mechanism interposed between the engine and the synchronous multi-stage speed change device, the traveling system auxiliary speed change device capable of achieving miniaturization of the synchronous multi-stage speed change device, while having a simple configuration.

According to the present invention, there is provided a traveling system auxiliary speed change device interposed between an engine and a synchronous multi-stage speed change device, the traveling system auxiliary speed change device including a high-low speed switching mechanism and a forward-reverse switching mechanism arranged in order from an upstream side to a downstream side in a power-transmitting direction. The forward-reverse switching mechanism is configured to be brought into a power-disconnected state in conjunction with a disconnecting operation of a clutch operation member for engaging or releasing the transmission state of a traveling system transmission path from the engine to driving wheels.

With the traveling system auxiliary speed change device according to the present invention, the driving side of the synchronous multi-stage speed change device is brought into the disconnected state with respect to the high-low speed switching mechanism in a time of the speed change operation of the synchronous multi-stage speed change device arranged on the downstream side in the power-transmitting direction from the traveling system auxiliary speed change device.

Specifically, according to the present invention, the inertia energy of the high-low speed switching mechanism does not act on the driving side of the synchronous multi-stage speed change device in time of the speed change operation of the synchronous multi-stage speed change device. Therefore, the device having a small synchronizing capacity may be used as the synchronous multi-stage speed change device, thereby enhancement in operation feeling, reduction in cost, and miniaturization could be achieved.

In a case where the forward-reverse switching mechanism is configured so as to switch the power-transmitting direction from its driving side operatively connected to the high-low speed switching mechanism to its driven side operatively connected to the synchronous multi-stage speed change device by a multi-plate clutch unit, the multi-plate clutch unit is preferably positioned on the drive side of the forward-reverse switching mechanism.

With the configuration, in time of the speed change operation of the synchronous multi-stage speed change device, the inertia energy of a clutch housing and a piston in the multi-plate type clutch unit is prevented from acting on the driving side of the synchronous multi-stage speed change device, whereby the synchronous multi-stage speed change device could be further miniaturized.

Preferably, the traveling system auxiliary speed change device further has a housing including a housing main body, and a bearing member removably connected at an intermediate portion in a fore-and-aft direction of the housing main body so as to divide an inner space of the housing main body into a front chamber and a rear chamber. The high-low speed switching mechanism and the forward-reverse switching mechanism are respectively accommodated within the front chamber and the rear chamber.

With the configuration, the assembly of both switching mechanisms could be enhanced, and the strength of a housing member for both switching mechanisms could be enhanced.

In a case where each of the high-low speed switching mechanism and the forward-reverse switching mechanism is configured so as to transmit the power from its driving side to its driven side by a multi-plate clutch unit, the high-low speed switching clutch unit of the high-low speed switching mechanism and the forward-reverse switching clutch unit of the forward-reverse switching mechanism are preferably positioned on different axial lines.

With the configuration, the respective hydraulic fluid supply configurations for the clutch units are arranged on the bearing member while thinning the thickness of the bearing member.

In one embodiment, the high-low speed switching mechanism includes a high-low speed switching drive shaft operatively connected to the engine, and a high-low speed switching driven shaft arranged substantially parallel to the high-low speed switching drive shaft in a state of being operatively connected to the high-low speed switching drive shaft through the high-low speed switching clutch unit. The forward-reverse switching mechanism includes a forward-reverse switching drive shaft positioned coaxially with the high-low speed switching driven shaft in a state of being relatively non-rotatable to the high-low speed switching driven shaft about its axial line, and a forward-reverse switching driven shaft arranged so as to be operatively connected to the forward-reverse switching drive shaft through the forward-reverse switching clutch unit. The high-low speed switching clutch unit and the forward-reverse switching clutch unit are positioned on the corresponding drive shafts.

Preferably, the high-low speed switching drive shaft is positioned above the high-low speed switching driven shaft.

With the configuration, the viscosity resistance by the stored fluid on the forward-reverse switching clutch unit could be reduced even if fluid is stored in the internal space of the housing main body. Therefore, the forward-reverse switching clutch unit could be brought into a half-clutch state with satisfactory accuracy.

In another embodiment, the high-low speed switching mechanism includes a high-low speed switching drive shaft operatively connected to the engine, and a high-low speed switching driven shaft arranged substantially parallel to the high-low speed switching drive shaft in a state of being operatively connected to the high-low speed switching drive shaft through the high-low speed switching clutch unit. The forward-reverse switching mechanism includes a forward-reverse switching drive shaft positioned coaxially with the high-low speed switching driven shaft in a state of being relatively non-rotatable to the high-low speed switching driven shaft about its axial line, and a forward-reverse switching driven shaft arranged coaxially with high-low speed switching drive shaft in a state of being operatively connected to the forward-reverse switching drive shaft through the forward-reverse switching clutch unit. The high-low speed switching clutch unit and the forward-reverse switching clutch unit are positioned on the corresponding driven shafts.

Preferably, the high-low speed switching driven shaft is positioned below the high-low speed switching drive shaft.

With the configuration, the viscosity resistance by the stored fluid on the forward-reverse switching clutch unit could be reduced even if fluid is stored in the internal space of the housing main body. Therefore, the forward-reverse switching clutch unit could be brought into a half-clutch state with satisfactory accuracy.

### BRIEF DESCRIPTION OF THE DRAWINGS

The invention, together with objects and advantages thereof, may best be understood by reference to the following description of the presently preferred embodiments together with the accompanying drawings.

Fig. 1 is a schematic view illustrating a power-transmitting path of a working vehicle to which a traveling system auxiliary speed change device according to an embodiment 1 of the present invention is applied.

Fig. 2 is a vertical cross-sectional side view of the vicinity of the traveling system auxiliary speed change device according to the embodiment 1.

Fig. 3 is a schematic view illustrating a power-transmitting path of a working vehicle to which a traveling system auxiliary speed change device according to a modified embodiment is applied.

Fig. 4 is a vertical cross-sectional side view of the vicinity of the traveling system auxiliary speed change device according to another modified embodiment.

Fig. 5 is a hydraulic circuit diagram of the working vehicle shown in Fig. 1.

Fig. 6 is a hydraulic circuit diagram of a forward-reverse switching hydraulic circuit forming a part of the hydraulic circuit in the working vehicle.

FIG. 7 is a vertical cross-sectional side view of the vicinity of a traveling system auxiliary speed change device according to an embodiment 2 of the present invention.

### DETAILED DESCRIPTION OF THE PREFERRED EMBODIMENTS

### Embodiment 1

One preferred embodiment of a traveling system auxiliary speed change device according to the present invention will now be described with reference to the accompanied drawings.

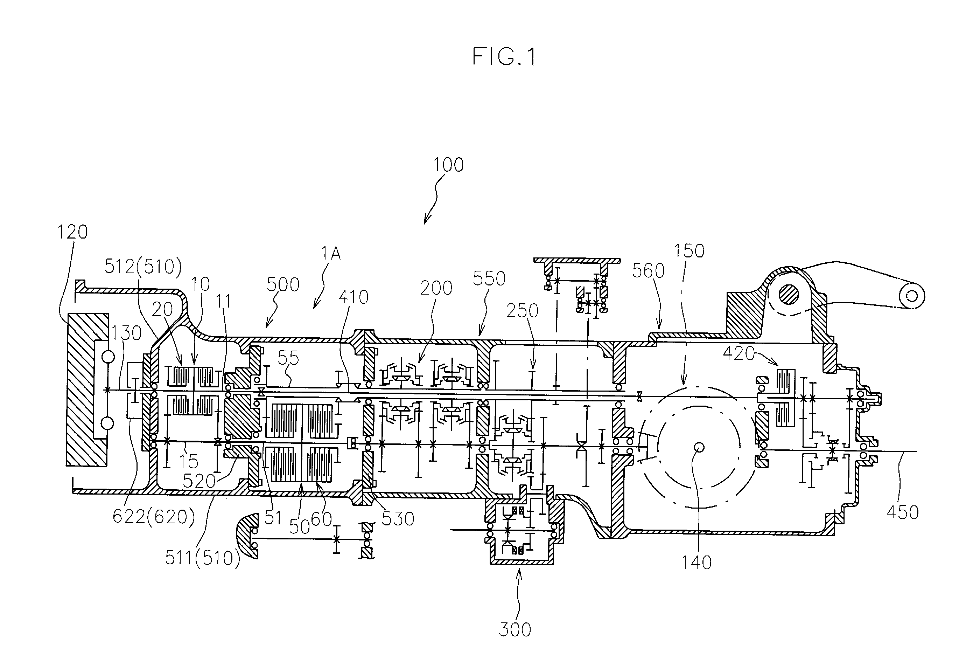

Fig. 1 is a schematic view illustrating a power-transmitting path of a working vehicle 100 to which a traveling system auxiliary speed change device 1A according to the present embodiment is applied.

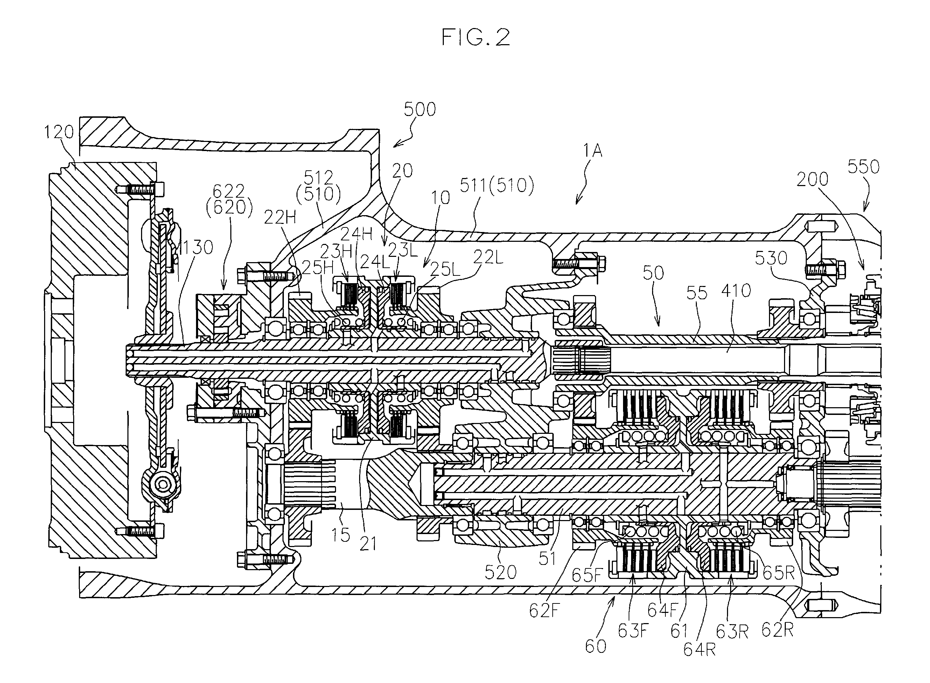

Fig. 2 is a vertical cross-sectional side view of the vicinity of the traveling system auxiliary speed change device 1A.

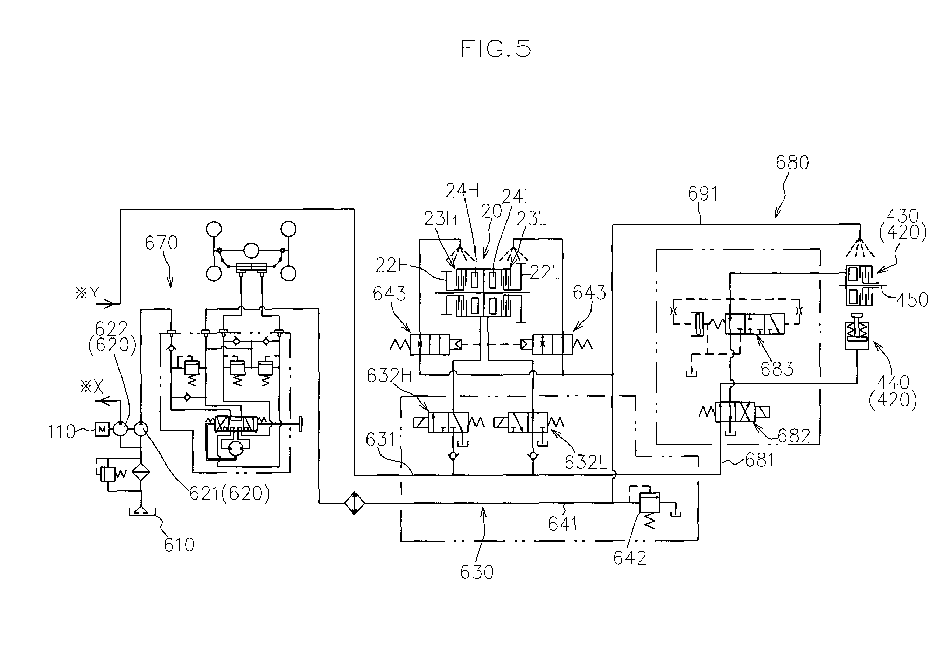

As shown in Fig. 1, the traveling system auxiliary speed change device 1A is interposed in the traveling system transmission path from an engine 110 (see Fig. 5) to driving wheels.

Specifically, in the present embodiment, the working vehicle 100 includes a traveling system transmission structure forming the traveling system transmission path.

As shown in Fig. 1, the traveling system transmission structure includes a driving force shaft 130 operatively connected to the engine 110 by way of a flywheel 120; a synchronous multi-stage speed change device 200 serving as a main speed change device; a complex multi-stage speed change device 250 serving as a sub-speed change device; a main differential gear device 150 for differentially transmitting the output from the sub-speed change device to a pair of left and right main driving axles 140; and the traveling system auxiliary speed change device 1A interposed between the engine 110 and the synchronous multi-stage speed change device 200.

The reference character 300 in Fig. 1 is a sub-driving wheel driving unit removably arranged in the traveling system transmission structure. The sub-driving wheel driving unit 300 is configured so as to output the driving force synchronized with the driving force, which is input to the main differential gear device 150, towards the sub-driving wheels.

In the present embodiment, the working vehicle 100 also includes a PTO system transmission structure for outputting the power from the engine 110 towards the outside, in addition to the traveling system transmission structure.

The PTO system transmission structure includes a PTO transmission shaft 410 coupled to the driving force shaft 130 in a relatively non-rotatable manner about the axis line, a PTO clutch device 420 having a driving side operatively connected to the PTO transmission shaft 410, and a PTO shaft 450 operatively connected to a driven side of the PTO clutch device 420.

The traveling system auxiliary speed change device 1A, which is arranged between the engine 110 and the synchronous multi-stage speed change device 200 as described above, switches the transmitting direction and enlarges the speed changing range in each transmitting direction.

Specifically, the traveling system auxiliary speed change device 1A includes a high-low speed switching mechanism 10 and a forward-reverse switching mechanism 50.

The high-low speed switching mechanism 10 is configured so as to switch the power-transmitting speed from its driving side to its driven side according to the operation of a high-low speed switching operation member such as H/L switching lever and the like, arranged in a vicinity of a driver's seat of the working vehicle 100.

The forward-reverse switching mechanism 50 is configured so as to switch the power-transmitting direction from its driving side to its driven side into a forward direction or a reverse direction according to the operation of a forward-reverse switching operation member such as a forward-reverse switching lever arranged in the vicinity of the driver's seat, and to have the power-transmission from the driving side to the driven side in the disconnected state according to the disconnecting operation of a clutch operation member such as a clutch pedal.

The forward-reverse switching operation member and the clutch operation member may be separate to each other, but may obviously be integrally formed as a single member.

In the traveling system auxiliary speed change device 1A having the above configuration, the high-low speed switching mechanism 10 is positioned on the upstream side in the power-transmitting direction from the forward-reverse switching mechanism 50, whereby the volume of the synchronous multi-stage speed change device 200 could be reduced.

In other words, the synchronous multi-stage speed change device 200 is configured to engage the corresponding driving-side spline and the driven-side spline after synchronously rotating the synchronizer ring and the synchronizing cone through friction engagement in a time of the speed change operation from the driving side to the driven side.

The driven side of the synchronous multi-stage speed change device 200 is operatively connected to the main driving wheel by way of various transmission members. Therefore, in the speed change operation of the synchronous multi-stage speed change device 200, the synchronizer ring and the synchronizing cone have to synchronize the rotation speed of the driving side to the rotation speed of the driven side while being against the inertia energy of the driving side.

Therefore, the speed change operation of the synchronous multi-stage speed change device 200 is performed on the basis that the forward-reverse switching mechanism 50 is in the power disconnected state by the clutch operation member, whereas in the conventional traveling system auxiliary speed change device, a great inertia energy acts on the driving side of the synchronous multi-stage speed change device in the speed change operation of the synchronous multi-stage speed change device since the forward-reverse switching mechanism is arranged on the upstream side in the transmitting direction from the high-low speed switching mechanism, resulting in arising a problem of enlarging the synchronous multi-stage speed change device.

More specifically, in the conventional configuration in which the forward-reverse switching mechanism, the high-low speed switching mechanism, and the synchronous multi-stage speed change device are arranged in order from the upstream side to the downstream side in the transmitting direction, the high-low speed switching mechanism remains operatively connected on the driving side of the synchronous multi-stage speed change device even if the forward-reverse switching mechanism is shifted to the power-disconnected state in time of the speed change operation of the synchronous multi-stage speed change device.

Therefore, the synchronizer ring and the synchronizing cone are required to synchronize the driving side with the driven side while being against the inertia energy of the high-low speed switching mechanism in time of the speed change operation of the synchronous multi-stage speed change device, and the device having a synchronizing volume capable of absorbing the inertia energy of the high-low speed switching mechanism has to be used as the synchronous multi-stage speed change device.

In the traveling system auxiliary speed change device 1A according to the present embodiment, on the other hand, the high-low speed switching mechanism 10 is positioned on the upstream side in the transmitting direction from the forward-reverse switching mechanism 50, as described above. In other words, the high-low speed switching mechanism 10, the forward-reverse switching mechanism 50 and the synchronous multi-stage speed change device 200 are arranged in order from the upstream side to the downstream side in the transmitting direction.

According to the above configuration, the inertia energy of the high-low speed switching mechanism 10 does not act on the driving side of the synchronous multi-stage speed change device 200 when the forward-reverse switching mechanism 50 is in the power-disconnected state in time of the speed change operation of the synchronous multi-stage speed change device 200.

Therefore, a small device having a small synchronizing capacity could be used as the synchronous multi-stage speed change device 200, whereby enhancement in the operation feeling, reduction in cost and miniaturization of the synchronous multi-stage speed change device 200 are achieved.

In the present embodiment, the complex multi-stage speed change device 250 includes a synchronous multi-stage speed change mechanism and a gear-sliding multi-stage speed change mechanism, as shown in Fig. 1.

Therefore, the synchronous multi-stage speed change mechanism in the complex multi-stage speed change mechanism 250 can be miniaturized by positioning the high-low speed switching mechanism 10 on the upstream side in the transmitting direction from the forward-reverse switching mechanism 50.

The detailed configuration of the traveling system auxiliary speed change device 1A will now be described.

In the present embodiment, the forward-reverse switching mechanism 50 includes a multi-plate clutch unit 60, and is configured so as to switch the power-transmitting direction from the driving side to the driven side and to disconnect the power-transmission from the driving side to the driven side by the multi-plate clutch unit 60, as shown in Figs. 1 and 2.

Specifically, the forward-reverse switching clutch unit 60 includes a clutch housing 61 supported in a relatively non-rotatable manner at a corresponding supporting shaft (hereinafter referred to as forward-reverse switching clutch supporting shaft); a forward gear member 62F and a reverse gear member 62R supported in a relatively rotatable manner at the forward-reverse switching clutch supporting shaft so as to be respectively positioned on one side (upstream side in the transmitting direction) and the other side (downstream side in the transmitting direction) in the axis line direction of the forward-reverse switching clutch supporting shaft with a partition wall of the clutch housing 61 in between; a forward friction plate group 63F including a forward gear member-side friction plate supported at the forward gear member 62F in a relatively non-rotatable manner and in a relatively movable manner in the axis line direction and a forward clutch housing-side friction plate supported at the clutch housing 61 in a relatively non-rotatable manner and in a relatively movable manner in the axis line direction so as to face the forward gear member-side friction plate; a forward piston 64F for frictionally engaging the forward friction plate group 63F; a reverse friction plate group 63R including a reverse gear member-side friction plate supported at the reverse gear member 62R in a relatively non-rotatable manner and in a relatively movable manner in the axis line direction and a reverse clutch housing-side friction plate supported at the clutch housing 61 in a relatively non-rotatable manner and in a relatively movable manner in the axis line direction so as to face the reverse gear member-side friction plate; and a reverse piston 64R for frictionally engaging the reverse friction plate group 63R.

In the present embodiment, the forward-reverse clutch unit 60 is of a hydraulic operation type in which the forward piston 64F and the reverse piston 64R frictionally engage the corresponding forward friction plate group 63F and the reverse friction plate group 63R through the action of the hydraulic pressure, respectively.

Therefore, in addition to the above configuration, the forward-reverse switching clutch unit 60 includes a forward biasing member 65F for biasing the forward piston 64F in a direction away from the forward friction plate group 63F, and a reverse biasing member 65R for biasing the reverse piston 64R in a direction away from the reverse friction plate group 63R.

In the present embodiment, the forward-reverse switching clutch unit 60 is arranged on the driving side in the forward-reverse switching mechanism 50, as shown in Figs. 1 and 2, whereby the inertia energy that acts on the driving side of the synchronous multi-stage speed change device 200 in time of the speed change operation of the synchronous multi-stage speed change device 200 is further reduced.

Specifically, the forward-reverse switching mechanism 50 includes a forward-reverse switching drive shaft 51 operatively connected to the high-low speed switching mechanism 10 arranged on the upstream side in the transmitting direction from the forward-reverse switching mechanism 50, and a forward-reverse switching driven shaft 55 operatively connected to the synchronous multi-stage speed change device 200 arranged on the downstream side in the transmitting direction from the forward-reverse switching mechanism 50 in the present embodiment, where the forward-reverse switching drive shaft 51 acts as the forward-reverse switching clutch supporting shaft.

By arranging the forward-reverse switching clutch unit 60 on the driving side in the forward-reverse switching mechanism 50, as described above, the clutch housing 61 as well as the forward piston 64F and the reverse piston 64R are disconnected to the synchronous multi-stage speed change device 200 when the forward-reverse switching mechanism 50 is shifted to the power-disconnected state in time of the speed change operation of the synchronous multi-stage speed change device 200.

Therefore, the inertia energy that acts on the driving side of the synchronous multi-stage speed change device 200 in time of the speed change operation of the synchronous multi-stage speed change device 200 is further reduced.

In the present embodiment, the forward-reverse switching mechanism 50 is of a two parallel shafts type in which the forward-reverse switching drive shaft 51 is coaxially coupled to a high-low speed switching driven shaft 15 in the high-low speed switching mechanism 10 in a relatively non-rotatable manner about the axis line, and the forward-reverse switching driven shaft 55 is arranged substantially parallel to the forward-reverse switching drive shaft 51, as shown in Figs. 1 and 2, but the present invention is obviously not limited to the configuration.

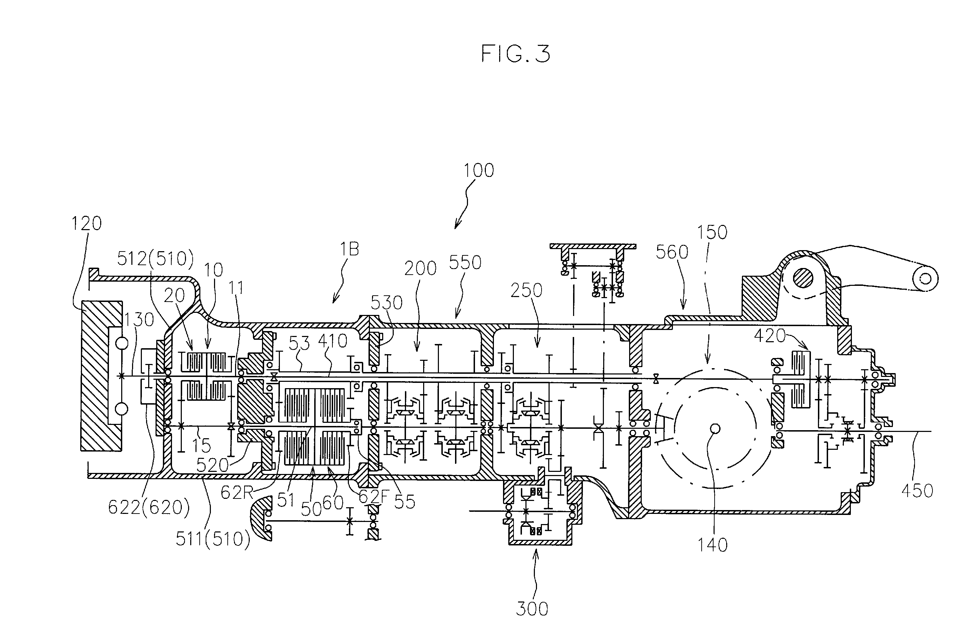

For example, the forward-reverse switching mechanism 50 may be configured to include the forward-reverse switching drive shaft 51, the forward-reverse switching driven shaft 55 arranged coaxially with the forward-reverse switching drive shaft 51 in a state of being relatively rotatable about the axis line, and a reverse transmission shaft 53 arranged substantially parallel to the forward-reverse switching drive shaft 51, as shown in Fig. 3.

In the forward-reverse switching mechanism 50 shown in Fig. 3, the reverse gear member 62R is supported at the forward-reverse switching drive shaft 51 at one side in the axis line direction (upstream side in the transmitting direction) of the clutch housing 61. The forward gear member 62F is positioned on the other side in the axis line direction (downstream side in the transmitting direction) of the clutch housing 61 in a state of being rotatable with respect to the forward-reverse switching drive shaft 51 and relatively non-rotatable with respect to the forward-reverse switching driven shaft 55.

The high-low speed switching mechanism 10 includes a multi-plate clutch unit 20, and is configured so as to switch the rotation speed of the power transmitted from the driving side to the driven side through the multi-plate clutch unit 20, as shown in Figs. 1 and 2.

Specifically, the high-low speed switching mechanism 10 includes a high-low speed switching drive shaft 11 operatively connected to the driving force shaft 130, a high-low speed switching driven shaft 15 arranged substantially parallel to the high-low speed switching drive shaft 11, and the high-low sped switching clutch unit 20. The high-low speed switching mechanism 10 is configured to rotate the high-low speed switching driven shaft 15 at the rotation speed corresponding to the high speed stage or the low speed state through the clutch unit 20.

In the present embodiment, the high-low speed switching drive shaft 11 is integrally formed with the driving force shaft 130 (see Fig. 2).

The high-low speed switching clutch unit 20 is supported at one of the shafts (hereinafter referred to as high-low speed switching clutch supporting shaft) of the high-low speed switching drive shaft 11 or the high-low speed switching driven shaft 15.

In the present embodiment, the high-low speed switching drive shaft 11 serves as the high-low speed switching clutch supporting shaft, as shown in Figs. 1 and 2.

Specifically, the high-low speed switching clutch unit 20 includes a clutch housing 21 supported at the high-low speed switching clutch supporting shaft in a relatively non-rotatable manner; a high speed stage gear member 22H and a low speed stage gear member 22L supported at the high-low speed switching clutch supporting shaft in a relatively rotatable manner so as to be respectively positioned at one side and the other side in the axis line direction with the clutch housing 21 in between; a high speed stage friction plate group 23H including a high speed stage gear member-side friction plate supported at the high speed stage gear member 22H in a relatively non-rotatable manner and in a movable manner in the axis line direction and a high speed stage clutch housing-side friction plate supported at the clutch housing 21 in a relatively non-rotatable manner and in a movable manner in the axis line direction so as to face the high speed stage gear member-side friction plate; a high speed stage piston 24H for frictionally engaging the high speed stage friction plate group 23H; a low speed stage friction plate group 23L including a low speed stage gear member-side friction plate supported at the low speed stage gear member 22L in a relatively non-rotatable manner and in a movable manner in the axis line direction and a low speed stage clutch housing-side friction plate supported at the clutch housing 21 in a relatively non-rotatable manner and in a movable manner in the axis line direction so as to face the low speed stage gear member-side friction plate; and a low speed stage piston 24L for frictionally engaging the low speed stage friction plate group 23L.

In the present embodiment, the high-low speed switching clutch unit 20 is of a hydraulic operation type in which both of the high speed stage piston 24H and the low speed stage piston 24L frictionally engage the corresponding friction plate group 23H, 23L through the action of the hydraulic pressure.

Therefore, the high-low speed switching clutch unit 20 further includes a high speed stage biasing member 25H for biasing the high speed stage piston 24H in the direction away from the high speed stage friction plate group 23H, and a low speed stage biasing member 25L for biasing the low speed stage piston 24L in the direction away from the low speed stage friction plate group 23L.

In the present embodiment, the high-low speed switching clutch unit 20 is of a hydraulic operation type in which the pistons 24H, 24L frictionally engage the corresponding friction plate groups 23H, 23L through the action of the hydraulic pressure, as described above, but in place thereof, the high-low speed switching clutch unit 20 may be of a spring operating type in which both pistons 24H, 24L frictionally engage the corresponding friction plate group 23H, 23L through the action of the spring, or a complex type in which one of the pistons 24H, 24L frictionally engages the corresponding friction plate group 23H, 23L through the action of the hydraulic pressure and the other piston frictionally engages the corresponding friction plate group 23H, 23L through the action of the spring.

The high-low speed switching clutch unit 20 and the forward-reverse switching clutch unit 60 are preferably displaced to each other in respect to the axis position or arranged in a decentered manner as in the present embodiment (see Figs. 1 and 2) and the modified embodiment (see Fig. 3).

That is, the high-low speed switching clutch supporting shaft and the forward-reverse switching clutch supporting shaft are configured so as not to be coaxially positioned to each other.

By arranging the high-low speed switching clutch unit 20 and the forward-reverse switching clutch unit 60 in a decentered manner as described above, the width in the fore-and-aft direction of a bearing member 520, which supports the downstream ends in the transmitting direction of the high-low speed switching drive shaft 11 and the driven shaft 15 and the upstream end in the transmitting direction of the forward-reverse switching drive shaft 51, can be made thin even if both a rotary joint forming a hydraulic fluid supply structure for the high-low speed switching clutch unit 20 and a rotary joint forming a hydraulic fluid supply structure for the forward-reverse switching clutch unit 60 are formed at the bearing member 520.

A structure for supporting the high-low speed switching mechanism 10 and the forward-reverse switching mechanism 50 will now be described.

As shown in Figs. 1 and 2, the high-low speed switching mechanism 10 and the forward-reverse switching mechanism 50 are accommodated in a single housing 500 in the present embodiment.

In the present embodiment, the housing 500 is connected on the front side in the fore-and-aft direction of an intermediate housing 550 for accommodating the main speed change device 200 and the sub-speed change device 250, and is configured to form a part of a vehicle frame of the working vehicle 100.

Specifically, the working vehicle 100 includes the intermediate housing 550, and a rear housing 560 that accommodates the main differential gear device 150 and is connected on the rear side in the fore-and-aft direction of the intermediate housing 550.

The housing 500, the intermediate housing 550, and the rear housing 560 are connected in series along the fore-and-aft direction of the vehicle to form the vehicle frame.

The housing 500 includes a housing main body 510 and the bearing member 520.

In the present embodiment, the housing main body 510 is configured to accommodate the high-low speed switching mechanism 10 and the forward-reverse switching mechanism 50 and also to accommodate the flywheel 120 positioned on the upstream side in the power-transmitting direction of the high-low switching mechanism 10.

Specifically, the housing main body 510 includes a hollow peripheral wall 511 extending in the fore-and-aft direction of the vehicle, and a partition wall 512 integrally formed with the peripheral wall 511 so as to divide the internal space defined by the peripheral wall 511 into the front side and the rear side in the fore-and-aft direction of the vehicle.

The flywheel 120 is accommodated in a dry chamber positioned on the front side in the fore-and-aft direction with the partition wall 512 as the reference, and the high-low speed switching mechanism 10 and the forward-reverse switching mechanism 50 are accommodated in an oil chamber positioned on the rear side in the fore-and-aft direction with the partition wall 512 as the reference.

The bearing member 520 is removably connected at the intermediate portion in the fore-and-aft direction of the peripheral wall 511 in the housing main body 510 so as to divide the oil chamber into a front chamber and a rear chamber.

The high-low speed switching mechanism 10 is accommodated in the front chamber, and the forward-reverse switching mechanism 50 is accommodated in the rear chamber.

Specifically, the high-low speed switching drive shaft 11 and the high-low speed switching driven shaft 15 have the upstream ends in the power-transmitting direction supported at the partition wall 512 and the downstream ends in the power-transmitting direction supported at the bearing member 520, as shown in Figs. 1 and 2.

The forward-reverse switching drive shaft 51 and the forward-reverse driven shaft 55 have the upstream ends in the power-transmitting direction supported at the bearing member 520 and the downstream ends in the power-transmitting direction supported at a second bearing member 530, which is removably connected to the rear end in the fore-and-aft direction of the housing main body 510, as shown in Figs. 1 and 2.

As described above, in the present embodiment, the high-low speed switching mechanism 10 and the forward-reverse switching mechanism 50 are accommodated in the single housing 500, whereby the strength is enhanced compared to a configuration in which dedicated housings for accommodating the respective switching mechanism 10, 50 are connected.

Moreover, in the present embodiment, the high-low speed switching mechanism 10 and the forward-reverse switching mechanism 50 are supported by utilizing the bearing member 520 removable with respect to the housing main body 510, whereby the assembly of the switching mechanisms 10, 50 is enhanced.

Furthermore, in the present embodiment, the high-low speed switching clutch unit 20 in the high-low speed switching mechanism 10 and the forward-reverse switching clutch unit 60 in the forward-reverse switching mechanism 50 are arranged in a decentered manner, as described above.

Therefore, even if both the rotary joint for the high-low speed switching clutch unit 20 and the rotary joint for the forward-reverse switching clutch unit 60 are formed at the bearing member 520, which is positioned between the high-low speed switching mechanism 10 and the forward-reverse switching mechanism 50, for supporting both switching mechanisms, as in the present embodiment, the rotary joints are arranged so as to be displaced to each other, and thus the width in the fore-and-aft direction of the bearing member 520 can be made as thin as possible.

In the present embodiment and the modified embodiment, the high-low speed switching clutch unit 20 and the forward-reverse switching clutch unit 60 are arranged in a decentered manner by having the high-low speed switching clutch unit 20 and the forward-reverse switching clutch unit 60 respectively supported at the corresponding drive shaft 11, 51 in a configuration in which the high-low speed switching drive shaft 11 and the high-low speed switching driven shaft 15 are arranged substantially parallel and the forward-reverse switching drive shaft 51 and the high-low speed switching driven shaft 15 are concentrically arranged, as shown in Figs. 1 to 3, but the present invention is obviously not limited thereto.

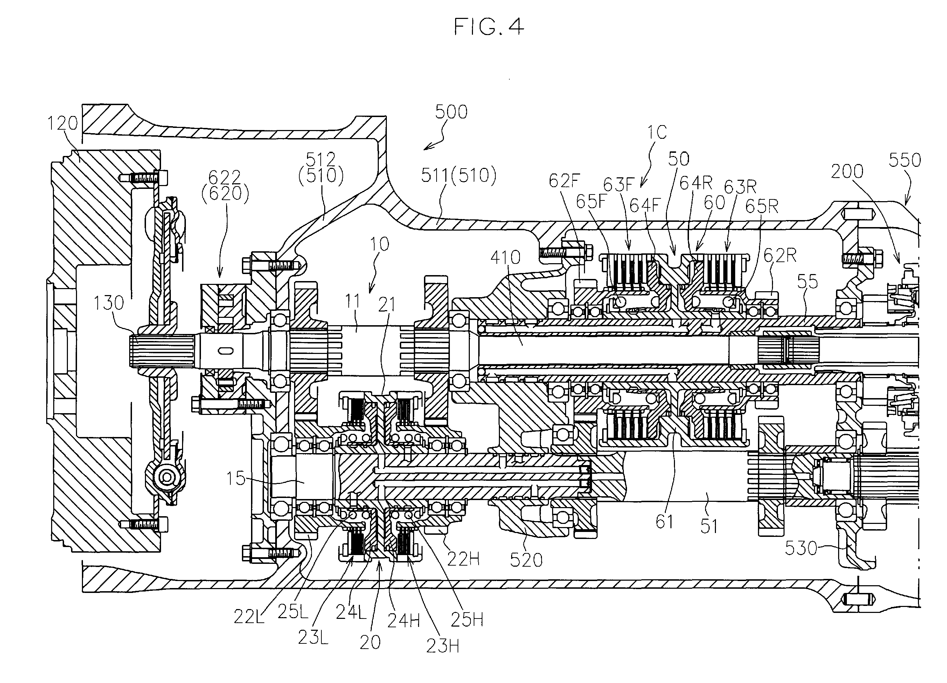

In other words, as shown in Fig. 4, the high-low speed switching clutch unit 20 and the forward-reverse switching clutch unit 60 may be arranged in a decentered manner by having the high-low speed switching clutch unit 20 and the forward-reverse switching clutch unit 60 supported at the corresponding driven shafts 15, 55 in a configuration in which the high-low speed switching drive shaft 11 and the high-low speed switching driven shaft 15 are arranged substantially parallel, the forward-reverse switching drive shaft 51 is arranged concentrically with the high-low speed switching driven shaft 15, and the forward-reverse switching driven shaft 55 is arranged substantially parallel to the forward-reverse switching drive shaft 51 so that the forward-reverse switching driven shaft 55 is positioned concentrically with the high-low speed switching drive shaft 11.

In the modified embodiment shown in Fig. 4, the high-low speed switching drive shaft 11 is positioned above the high-low speed switching driven shaft 15, and thus the forward-reverse switching driven shaft 55 positioned coaxially with the high-low speed switching drive shaft 11 and supporting the forward-reverse switching clutch unit 60 is arranged above the forward-reverse switching drive shaft 51.

In the configuration, the influence of the fluid stored in the fluid chamber on the forward-reverse switching clutch unit 60 is reduced, and the accuracy of a half-clutch control of the forward-reverse switching clutch unit 60 is enhanced.

In other words, the forward-reverse switching mechanism 50 is configured so as to selectively take a forward transmission state, a reverse transmission state or a power-shutoff state with respect to the power-transmission from the forward-reverse switching drive shaft 51 to the forward-reverse driven shaft 55. Specifically, the forward-reverse switching mechanism 50 further takes a half-clutch state in which the power is partially transmitted from the forward-reverse switching drive shaft 51 to the forward-reverse switching driven shaft 55, in addition to the forward transmission state, the reverse transmission state and the power-shutoff state.

The half-clutch state is obtained by bringing the forward friction plate group 63F (or reverse friction plate group 63R) into a frictional engagement state with the forward gear member-side friction plate and the forward clutch housing-side friction plate being slid to each other, whereby sudden speed change of the working vehicle 100 is prevented when starting the working vehicle 100 from the stopped state or when stopping the working vehicle from the traveling state.

Specifically, the oil chamber for accommodating the forward-reverse switching mechanism 50 is configured to have the internal space capable of storing oil, as well as the intermediate housing 550 and the rear housing 560.

Therefore, if the forward-reverse switching clutch unit 60 is arranged at the lower portion in the oil chamber, the stored fluid is interposed between the corresponding friction plates in the forward friction plate group 63F (or reverse friction plate group 63R), and it is difficult to bring the forward-reverse switching clutch unit 60 into the half-clutch state due to the viscosity resistance of the stored oil.

With regards to this point, the forward-reverse switching clutch unit 60 is supported at the forward-reverse switching driven shaft 55 arranged above the forward-reverse switching drive shaft 51, as described above, in the modified embodiment shown in Fig. 4.

Accordingly, the adverse affect of the stored fluid in the fluid chamber on the forward-reverse switching clutch unit 60 is prevented as much as possible.

The enhancement in the accuracy control of the half-clutch state is obviously not limited to the modified embodiment shown in Fig. 4.

In other words, the adverse affect of the stored fluid on the forward-reverse switching clutch unit 60 is also prevented as much as possible by arranging the high-low speed switching drive shaft 11 under the high-low speed switching driven shaft 15, and arranging the forward-reverse switching drive shaft 51 coaxially with the high-low speed switching driven shaft 15, and further, by having the high-low speed switching clutch unit 20 and the forward-reverse switching clutch unit 60 supported at the corresponding drive shafts 11, 51.

The hydraulic circuit in the working vehicle 100 will now be described.

Fig. 5 shows a hydraulic circuit diagram of the working vehicle 100.

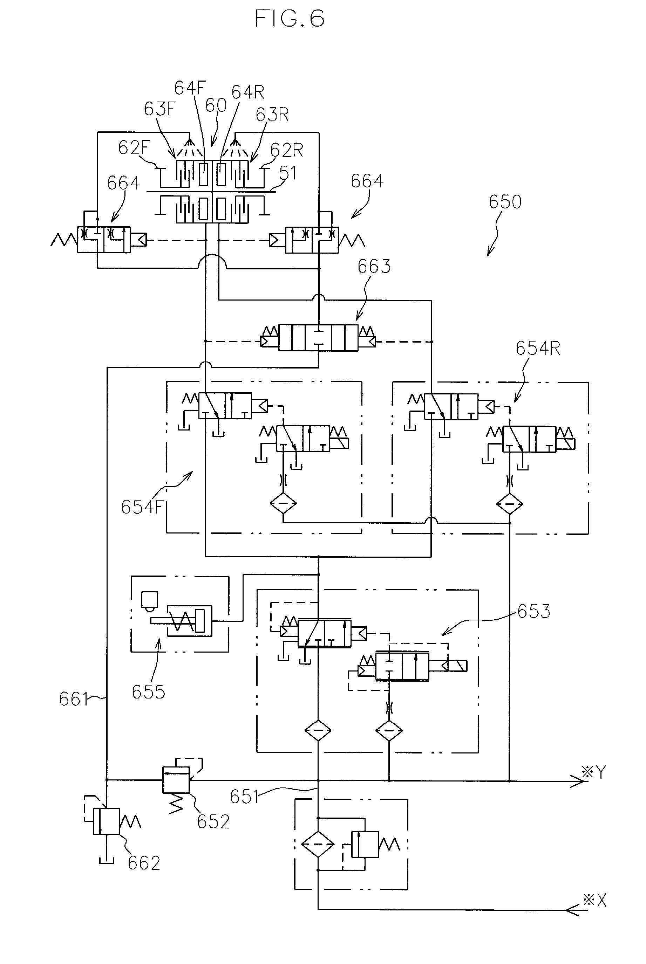

Furthermore, Fig. 6 shows a hydraulic circuit diagram of a forward-reverse switching hydraulic circuit 650 forming a part of the hydraulic circuit in the working vehicle 100.

As shown in Figs. 5 and 6, the working vehicle 100 includes a fluid tank 610; a hydraulic pump 620 configured so as to employ the stored fluid in the fluid tank 610 as a fluid source; and a high-low speed switching mechanism hydraulic circuit 630 and a forward-reverse switching mechanism hydraulic circuit 650 to which the hydraulic fluid is supplied from the hydraulic pump 620.

In the present embodiment, the working vehicle 100 further includes a power steering hydraulic circuit 670 and a PTO clutch hydraulic circuit 680 to which the hydraulic fluid is supplied from the hydraulic pump 620.

As described above, the oil chamber in the housing 500 as well as the internal spaces of the intermediate housing 550 and the rear housing 560 are capable of storing fluid, and such internal spaces are also commonly used as the fluid tank 610, in the present embodiment.

The hydraulic pump 620 is operatively driven by the engine 110.

In the present embodiment, the hydraulic pump 620 includes first and second hydraulic pumps 621, 622.

The first hydraulic pump 621 is configured to supply the hydraulic fluid to the power steering hydraulic circuit 670.

The second hydraulic pump 622 is configured to supply the hydraulic fluid to the high-low speed switching mechanism hydraulic circuit 630, the forward-reverse switching hydraulic circuit 650, and the PTO clutch hydraulic circuit 680.

In the present embodiment shown in Figs. 1 and 2, as well as the modified embodiments shown in Figs. 3 and 4, the second hydraulic pump 622 is supported at the front surface of the partition wall 512, and the first hydraulic pump 621 is arranged on the engine side.

The forward-reverse switching mechanism hydraulic circuit 650 includes a forward-reverse switching hydraulic fluid line 651 and a forward-reverse switching lubricating fluid line 661, as shown in Fig. 6.

The forward-reverse switching hydraulic fluid line 651 is configured to supply the pressure fluid from the second hydraulic pump 622 to the forward-reverse switching clutch unit 60.

Specifically, a hydraulic fluid pressure setting relief valve 652 for setting the hydraulic pressure of the hydraulic fluid line 651; an inching valve 653 for communicating/ shutting off the hydraulic fluid line 651 according to the operated amount of the clutch operation member; and a forward clutch ON/OFF valve 654F and a reverse clutch ON/OFF valve 654R for turning ON/OFF the supply of hydraulic fluid to the forward piston 64F and the reverse piston 64R, respectively, in conjunction with the operation of the forward-reverse switching operation member are interposed in the forward-reverse switching hydraulic fluid line 651.

In the present embodiment, a pressure sensor 655 for detecting the hydraulic pressure of the hydraulic fluid line 651 is also interposed in the forward-reverse switching hydraulic fluid line 651.

The forward-reverse switching lubricating fluid line 661 is configured to supply the relief fluid from the hydraulic fluid pressure setting relief valve 652 to the forward friction plate group 63F and the reverse friction plate group 63R.

Specifically, the forward-reverse switching lubricating fluid line 661 extends between the secondary side of the hydraulic fluid pressure setting relief valve 652 and each friction plate group 63F, 63R.

A lubricating fluid pressure setting relief valve 662; a lubricating fluid ON/OFF valve 663 for communicating/shutting off the lubricating fluid line 651 with the hydraulic fluid to the forward piston 64F and the reverse piston 64R as the pilot pressure; and flow rate control valves 664 for adjusting the fluid amount supplied to the friction plate group 63F, 63R according to the pushed amount of the corresponding piston 64F, 64R are interposed in the lubricating fluid line 661.

The high-low speed switching mechanism hydraulic circuit 630 includes a high-low speed switching hydraulic fluid line 631 and a high-low speed switching lubricating fluid line 641, as shown in Fig. 5.

The high-low speed switching hydraulic fluid line 631 is configured to supply the hydraulic fluid, which hydraulic pressure is set by the hydraulic fluid pressure setting relief valve 652, to the high-low speed switching clutch unit 20.

Specifically, a high speed stage clutch ON/OFF valve 632H and a low speed stage clutch ON/OFF valve 632L for turning ON/OFF the supply of hydraulic fluid to the high speed stage piston 24H and the low speed stage piston 24L, respectively, in conjunction with the operation of the high-low speed switching operation member are arranged in the high-low speed switching hydraulic fluid line 631.

The high-low speed switching lubricating fluid line 641 is configured so as to supply the returned fluid from the power steering hydraulic circuit 670 to the high-low speed switching clutch unit 20.

Specifically, a lubricating fluid pressure setting relief valve 642; and flow rate control valves 643 for adjusting the lubricating fluid amount supplied to the friction plate groups 23H, 23L with the hydraulic fluid pressure to the high speed stage piston 24H and the low speed stage piston 24L as the pilot pressure are interposed in the high-low speed switching lubricating fluid line 641.

The PTO clutch hydraulic circuit 680 includes a PTO hydraulic fluid line 681 and a PTO lubricating fluid line 691, as shown in Fig. 5.

The PTO hydraulic fluid line 681 is configured to supply the hydraulic fluid from the high-low speed switching hydraulic fluid line 631 to the PTO clutch device 420.

In the present embodiment, the PTO clutch device 420 is provided with a PTO clutch unit 430 for selectively engaging/ cutting off the power-transmission from the driving side to the driven side; and a PTO brake unit 440 for applying braking force to the driven side when the PTO clutch unit 430 cuts off the power-transmission.

Therefore, the PTO hydraulic fluid line 681 is configured to selectively supply the hydraulic fluid to the PTO clutch unit 430 or the PTO brake unit 440.

Specifically, a switching valve 682 for selectively switching the supply and discharge of the hydraulic fluid with respect to the PTO clutch unit 430 or the PTO brake unit 440; and a modulating valve 683 for gradually increasing the hydraulic pressure in time of supplying the hydraulic fluid to the PTO clutch unit 430 are interposed in the PTO hydraulic fluid line 681.

### Embodiment 2

Another embodiment of the traveling auxiliary speed change device according to the present invention will now be described with reference to the attached drawing.

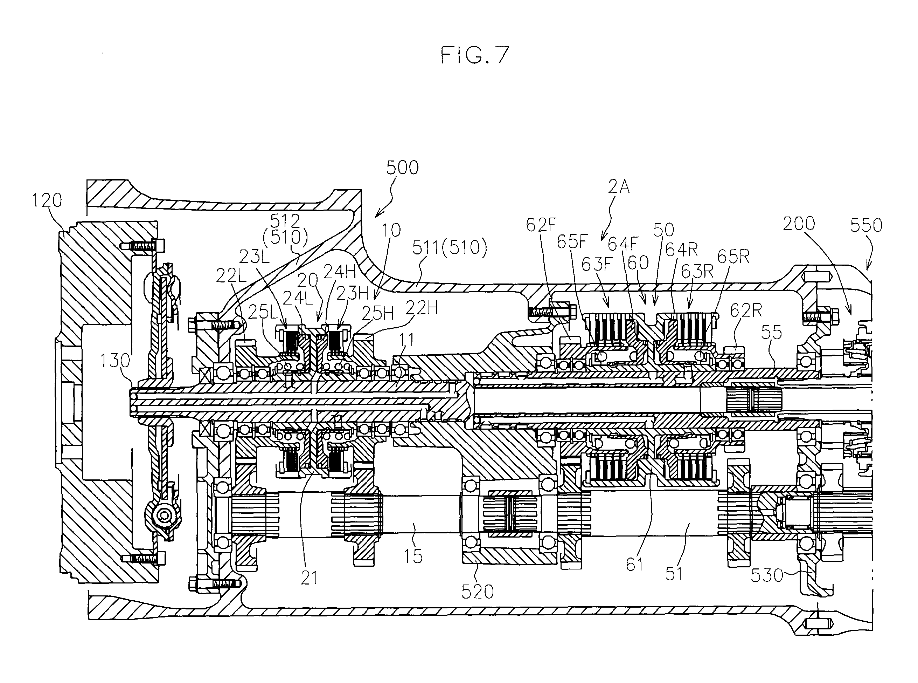

FIG. 7 is a vertical cross-sectional side view of the vicinity of the traveling system auxiliary speed change device 2A according to the present embodiment.

In the figure, the same reference characters are denoted for the same members as in the embodiment 1, and the detailed explanations thereof are omitted.

The traveling system auxiliary speed change devices 1A to 1C according to the embodiment 1 (see Figs. 1 and 2) and the modified embodiment (see Figs. 3 and 4) are configured so that the high-low sped switching clutch unit 20 and the forward-reverse switching clutch unit 60 are displaced to each other in respect to axis positions. On the other hand, the traveling system auxiliary speed change devices 2A according to the present embodiment is configured so that the high-low sped switching clutch unit 20 and the forward-reverse switching clutch unit 60 are positioned coaxially to each other.

Similarly to the embodiment 1 and the modified embodiments, in the traveling system auxiliary speed change devices 2A as well, enhancement in operation feeling, reduction in cost, and miniaturization could be achieved.

In a case where both the clutch units 20, 60 are positioned coaxially, the rotary joints for the clutch units 20, 60 are also positioned coaxially to each other, resulting in enlarging the width in the fore-and-aft direction of the bearing member 520.

With regard to this point, the second hydraulic pump 622, which is supported at the front surface of the partition wall 512 in the embodiment 1, is arranged on the engine side so that the partition wall 512 could be close to the flywheel 120 as much as possible, thereby obtaining spaces for arranging the high-low speed switching mechanism 10 and the forward-reverse switching mechanism 50 while preventing enlargement of the width in the fore-and-aft direction of the traveling system auxiliary speed change device 2A.

In the present embodiment, both the clutch units 20, 60 are positioned coaxially to each other by having the clutch units 20, 60 supported at the corresponding drive shafts 11, 51. Alternatively, both the clutch units 20, 60 could be supported at the corresponding driven shafts 15, 55 so that they are positioned coaxially to each other.

Although the high-low speed switching drive shaft 11 is positioned above the high-low speed switching driven shaft 15 in the each embodiment and modified embodiment, the high-low speed switching drive shaft 11 could be obviously positioned below the high-low speed switching driven shaft 15.

This specification is by no means intended to restrict the present invention to the preferred embodiments or modified embodiments set forth therein. Various modifications to the traveling system auxiliary speed change device may be made by those skilled in the art without departing from the spirit and scope of the present invention as defined in the appended claims.

## Claims

1. A traveling system auxiliary speed change device (1A, 1B, 1C, 2A) interposed between an engine (110) and a synchronous multi-stage speed change device (200), comprising:
a high-low speed switching mechanism (10) and a forward-reverse switching mechanism (50) arranged in order from an upstream side to a downstream side in a power-transmitting direction; wherein
the forward-reverse switching mechanism (50) is configured to be brought into a power-disconnected state in conjunction with a disconnecting operation of a clutch operation member for engaging or releasing the transmission state of a traveling system transmission path from the engine to driving wheels.

2. A traveling system auxiliary speed change device (1A, 1B, 1C, 2A) according to claim 1, wherein:
the forward-reverse switching mechanism (50) is configured so as to switch the power-transmitting direction from its driving side operatively connected to the high-low speed switching mechanism (10) to its driven side operatively connected to the synchronous multi-stage speed change device (200) by a multi-plate clutch unit; and
the multi-plate clutch unit (200) is positioned on the drive side of the forward-reverse switching mechanism (50).

3. A traveling system auxiliary speed change device (1A, 1B, 1C, 2A) according to claim 1 or 2, further comprising:
a housing (500) including a housing main body (510), and a bearing member (520) removably connected at an intermediate portion in a fore-and-aft direction of the housing main body (510) so as to divide an inner space of the housing main body into a front chamber and a rear chamber, wherein
the high-low speed switching mechanism (10) and the forward-reverse switching mechanism (50) are respectively accommodated within the front chamber and the rear chamber.

4. A traveling system auxiliary speed change device (1A, 1B, 1C, 2A) according to claim 1, wherein:
each of the high-low speed switching mechanism (10) and the forward-reverse switching mechanism (50) is configured so as to transmit the power from its driving side to its driven side by a multi-plate clutch unit (20, 60); and
the high-low speed switching clutch unit (20) of the high-low speed switching mechanism (10) and the forward-reverse switching clutch unit (60) of the forward-reverse switching mechanism (50) are positioned on different axial lines.

5. A traveling system auxiliary speed change device (1A, 1B, 1C, 2A) according to claim 4, wherein:
the high-low speed switching mechanism (10) includes a high-low speed switching drive shaft (11) operatively connected to the engine (110), and a high-low speed switching driven shaft (15) arranged substantially parallel to the high-low speed switching drive shaft (11) in a state of being operatively connected to the high-low speed switching drive shaft through the high-low speed switching clutch unit (20);
the forward-reverse switching mechanism (50) includes a forward-reverse switching drive shaft (51) positioned coaxially with the high-low speed switching driven shaft (15) in a state of being relatively non-rotatable to the high-low speed switching driven shaft (15) about its axial line, and a forward-reverse switching driven shaft (55) arranged so as to be operatively connected to the forward-reverse switching drive shaft (51) through the forward-reverse switching clutch unit (60); and
the high-low speed switching clutch unit (20) and the forward-reverse switching clutch unit (60) are positioned on the corresponding drive shafts (11, 51).

6. A traveling system auxiliary speed change device (1A, 1B, 1C, 2A) according to claim 5, wherein:
the high-low speed switching drive shaft (11) is positioned above the high-low speed switching driven shaft (15).

7. A traveling system auxiliary speed change device (1A, 1B, 1C, 2A) according to claim 4, wherein:
the high-low speed switching mechanism (10) includes a high-low speed switching drive shaft (11) operatively connected to the engine (110), and a high-low speed switching driven shaft (15) arranged substantially parallel to the high-low speed switching drive shaft (11) in a state of being operatively connected to the high-low speed switching drive shaft (11) through the high-low speed switching clutch unit (20);
the forward-reverse switching mechanism (50) includes a forward-reverse switching drive shaft (51) positioned coaxially with the high-low speed switching driven shaft (15) in a state of being relatively non-rotatable to the high-low speed switching driven shaft (15) about its axial line, and a forward-reverse switching driven shaft (55) arranged coaxially with high-low speed switching drive shaft (11) in a state of being operatively connected to the forward-reverse switching drive shaft (51) through the forward-reverse switching clutch unit (60); and
the high-low speed switching clutch unit (20) and the forward-reverse switching clutch unit (60) are positioned on the corresponding driven shafts (15, 55).

8. A traveling system auxiliary speed change device (1A, 1B, 1C, 2A) according to claim 7, wherein:
the high-low speed switching driven shaft (15) is positioned below the high-low speed switching drive shaft (11).
